# EUROPÄISCHE PATENTANMELDUNG

(11) **EP 3 839 281 A1**
(43) Veröffentlichungstag der Anmeldung: **23.06.2021**
(21) Anmeldenummer: 20213654.5
(22) Anmeldetag: 14.12.2020
(51) Int. Cl.: F16D 11/14, F16H 63/38, F16H 61/32, F16H 63/30, F16H 63/34

(54) **PARKSPERRENAKTUATOR, PARKSPERRE, ELEKTRISCHE ANTRIEBSEINRICHTUNG UND FAHRZEUG**

(30) Priorität: 19.12.2019 DE 102019135309
(71) Anmelder: Valeo Siemens eAutomotive Germany GmbH, 91056 Erlangen (DE)
(72) Erfinder: FÜRSTENHÖFER, Christian Gerhard, 90768 Fürth (DE); HAAS, Bernd, 90402 Nürnberg (DE); SEEMANN, Patrick, 97215 Weigenheim (DE)
(74) Vertreter: Dr. Gassner & Partner mbB

(57) **Zusammenfassung**

Parksperrenaktuator (1), umfassend
- eine Aktuatorwelle (2), die um eine Drehachse (3) drehbar gelagert ist,
- einen Primärantrieb (4),
- einen Sekundärantrieb (5),
- eine Kupplung (6) mit
- einem ersten Kupplungsteil (7), der auf der Aktuatorwelle (2) angeordnet und durch den Primärantrieb (4) zur Durchführung einer Drehbewegung um die Drehachse (3) antreibbar ist,
- einem zweiten Kupplungsteil (8), der aus einer ersten Kupplungsstellung, in welcher der zweite Kupplungsteil (8) in Eingriff mit dem ersten Kupplungsteil (7) und zur Übertragung der Drehbewegung des ersten Kupplungsteils (7) auf die Aktuatorwelle (3) mit dieser gekoppelt ist, in eine zweite Kupplungsstellung überführbar ist, in welcher die Kupplungsteile (7, 8) außer Eingriff sind und die Aktuatorwelle (3) mittels des Sekundärantriebs (5) um die Drehachse (3) drehbar ist, und
- einer Betätigungsvorrichtung (9), durch welche der zweite Kupplungsteil (8) aus der ersten Kupplungsstellung in die zweite Kupplungsstellung bewegbar ist, sowie

- ein Gleitlager (10), durch welches der zweite Kupplungsteil (8) beim Bewegen zwischen der ersten Kupplungsstellung und der zweiten Kupplungsstellung entlang der Aktuatorwelle (2) führbar ist.

## Beschreibung

Die vorliegende Erfindung betrifft einen Parksperrenaktuator, umfassend eine Aktuatorwelle, die um eine Drehachse drehbar gelagert ist, einen Primärantrieb, einen Sekundärantrieb und eine Kupplung mit einem ersten Kupplungsteil, der auf der Aktuatorwelle angeordnet und durch den Primärantrieb zur Durchführung einer Drehbewegung um die Drehachse antreibbar ist, einem zweiten Kupplungsteil, der aus einer ersten Kupplungsstellung, in welcher der zweite Kupplungsteil in Eingriff mit dem ersten Kupplungsteil und zur Übertragung der Drehbewegung des ersten Kupplungsteils auf die Aktuatorwelle mit dieser gekoppelt ist, in eine zweite Kupplungsstellung überführbar ist, in welcher die Kupplungsteile außer Eingriff sind und die Aktuatorwelle mittels des Sekundärantriebs um die Drehachse drehbar ist, und einer Betätigungsvorrichtung, durch welche der zweite Kupplungsteil aus der ersten Kupplungsstellung in die zweite Kupplungsstellung bewegbar ist.

Daneben betrifft die Erfindung eine Parksperre, eine elektrische Antriebseinrichtung und ein Fahrzeug.

Solche Parksperrenaktuatoren werden in Parksperren zur Blockierung eines Getriebes eingesetzt, um beispielsweise ein ungewolltes Rollen eines Fahrzeugs auf einer schiefen Ebene zu verhindern. Durch den Parksperrenaktuator ist dazu typischerweise eine das Getriebe blockierende Parksperrenklinke betätigbar. Eine drehbar gelagerte Aktuatorwelle wird dabei unter normalen Betriebsumständen durch einen über eine Kupplung mit der Aktuatorwelle gekoppelten Primärantrieb angetrieben.

Um das Getriebe im Falle einer Störung des Primärantriebs dennoch blockieren zu können, ist ein Sekundärantrieb vorgesehen. Um eine Drehung der Aktuatorwelle durch den Sekundärbetrieb zu veranlassen, kann eine in einer ersten Kupplungsstellung vorhandener Kopplung des Primärantrieb mit der Aktuatorwelle aufgehoben werden, indem ein zweiter Kupplungsteil durch dessen Bewegung entlang der Aktuatorwelle und ein erster Kupplungsteil außer Eingriff gebracht werden, sodass der Sekundärantrieb die Aktuatorwelle drehen kann. Es ist bekannt, den zweiten Kupplungsteil durch ein Lager mit axialen Reihen von Kugeln entlang der Aktuatorwelle zu führen.

Nachteilig an einer solchen Ausgestaltung ist, dass die Kugeln mit der Aktuatorwelle und/oder dem zweiten Kupplungsteil verkanten können und so eine Drehung der Aktuatorwelle durch den Sekundärantrieb erschweren, oder gar verhindern können.

Der Erfindung liegt die Aufgabe zugrunde, eine demgegenüber verbesserte, insbesondere zuverlässigere, Möglichkeit zur Betätigung einer Parksperre, insbesondere in einem elektrisch antreibbaren Fahrzeug, anzugeben.

Zur Lösung dieser Aufgabe wird erfindungsgemäß ein Parksperrenaktuator der eingangs genannten Art vorgeschlagen, der ein Gleitlager umfasst, durch welches der zweite Kupplungsteil beim Bewegen zwischen der ersten Kupplungsstellung und der zweiten Kupplungsstellung entlang der Aktuatorwelle führbar ist.

Die Erfindung beruht auf der Überlegung, mittels des Gleitlagers eine Reibung zwischen dem zweiten Kupplungsteil und der Aktuatorwelle effektiv zu reduzieren und die Gefahr eines Verkantens des zweiten Kupplungsteils weitestgehend auszuschließen. Bei einer Bewegung des zweiten Kupplungsteils in die zweite Kupplungsstellung mittels der Betätigungsvorrichtung kann der Sekundärantrieb so auf die Aktuatorwelle wirken und eine zuverlässige Drehung der Aktuatorwelle im Falle einer Störung des Primärantrieb ausüben.

Die Kupplung ist bei dem erfindungsgemäßen Parksperrenaktuator typischerweise als Klauenkupplung ausgebildet. Dazu können der erste Kupplungsteil und der zweite Kupplungsteil jeweils eine Kupplungsplatte mit gegengleich ausgebildeten Klauen aufweisen.

Es wird bei dem erfindungsgemäßen Parksperrenaktuator bevorzugt, wenn das Gleitlager durch einen Gleitring ausgebildet ist. Der Gleitring ist bevorzugt aus Kunststoff, beispielsweise PTFE, aus einem Keramikwerkstoff oder aus einem Metall mit geringer Reibkraft gebildet. Typischerweise ist der Gleitring koaxial zur Aktuatorwelle angeordnet.

Gemäß einer alternativen Weiterbildungsform ist das Gleitlager durch mehrere sich parallel zur Drehachse erstreckende stabförmige Gleitelemente ausgebildet. Typischerweise sind dabei drei in Umfangsrichtung um die Drehachse angeordnete Gleitelemente vorgesehen. Die Gleitelemente können jeweils in einer Nut des zweiten Kupplungsteils und/oder in einer Nut der Aktuatorwelle angeordnet sein. Auch die Gleitelemente sind bevorzugt aus einem Kunststoff, beispielsweise PTFE, aus einem Keramikwerkstoff oder aus einem Metall mit geringer Reibkraft gebildet.

Zweckmäßigerweise ist das Gleitlager bei dem erfindungsgemäßen Parksperrenaktuator drehfest mit dem zweiten Kupplungsteil verbunden. Dazu kann der zweite Kupplungsteil an seiner dem ersten Kupplungsteile abgewandten axialen Seite einen zylindrischen Aufnahmeraum aufweisen, in welchem das Gleitlager angeordnet ist. Bevorzugt ist das Gleitlager in den zweiten Kupplungsteil eingepresst.

In bevorzugter Weiterbildung des erfindungsgemäßen Parksperrenaktuators ist vorgesehen, dass die Aktuatorwelle einen Verbindungsabschnitt und der zweite Kupplungsteil einen zum Verbindungsabschnitt der Aktuatorwelle korrespondierenden Verbindungsabschnitt aufweist, wobei die Verbindungsabschnitte in der ersten Kupplungsstellung zur Übertragung der Drehbewegung formschlüssig gekoppelt und in der zweiten Kupplungsstellung entkoppelt sind. In der ersten Kupplungsstellung ermöglicht die Koppelung des zweiten Kupplungsteils mit der Aktuatorwelle die Übertragung der Drehbewegung des ersten Kupplungsteils auf die Aktuatorwelle. In der zweiten Kupplungsstellung, wenn die Verbindungabschnitte entkoppelt sind, kann der Sekundärantrieb die Aktuatorwelle drehen, ohne dabei den zweiten Kupplungsteil mitzunehmen. Dies reduziert das Trägheitsmoment bei der Drehung durch den Sekundärantrieb erheblich, sodass der Sekundärantrieb vorteilhafterweise weniger stark ausgebildet werden muss und/oder die Drehung der Aktuatorwelle schneller vollziehen kann. Insbesondere das als Gleitring ausgebildete Gleitlager ermöglicht eine solche Drehbewegung der Aktuatorwelle gegenüber dem zweiten Kupplungsteil mit sehr geringer Reibung.

Dabei wird es bevorzugt, wenn die Verbindungsabschnitte jeweils durch eine Verzahnung ausgebildet sind. Zweckmäßigerweise weist der zweite Kupplungsteil eine Innenverzahnung auf und/oder die Aktuatorwelle eine Außenverzahnung auf. Die Verzahnungen sind bevorzugt als Kerbverzahnung ausgebildet. Es wird ferner bevorzugt, wenn axiale Enden der Verzahnung des zweiten Kupplungsteils, die zur Verzahnung der Aktuatorwelle weisen, und/oder axiale Enden der Verzahnung der Aktuatorwelle, die zur Verzahnung des zweiten Kupplungsteils weisen, abgeschrägt ausgebildet sind. Dies erleichtert die Kopplung der Verbindungabschnitte beim Übergang von der zweiten Kupplungsstellung in die erste Kupplungsstellung.

Bei dem erfindungsgemäßen Parksperrenaktuator ist insbesondere vorgesehen, dass die Betätigungsvorrichtung einen Elektromagneten umfasst, welcher bei einer Bestromung eine magnetische Anziehungskraft erzeugt, durch die der zweite Kupplungsteil in die zweite Kupplungsstellung bewegbar ist.

Um den zweiten Kupplungsteil zuverlässig von der zweiten Kupplungsstellung in die erste Kupplungsstellung zu überführen, wird es bei dem erfindungsgemäßen Parksperrenaktuator bevorzugt, wenn die Betätigungsvorrichtung ein Rückstellelement umfasst, welches eine zum ersten Kupplungsteil gerichtete Rückstellkraft auf den zweite Kupplungsteil ausübt. Typischerweise ist das Rückstellelement durch eine koaxial zur Drehachse angeordnete Feder ausgebildet.

In zweckmäßiger Weiterbildung des erfindungsgemäßen Parksperrenaktuators ist vorgesehen, dass der Primärantrieb einen Elektromotor aufweist. Dadurch lässt sich ein hinreichend großes Drehmoment der Aktuatorwelle realisieren. Da der Sekundärantrieb typischerweise als Ersatz für den Primärantrieb bei dessen Störung dient, wird es bevorzugt, wenn ein Versorgungsstromkreis des Primärantriebs und ein Versorgungsstromkreis der Betätigungsvorrichtung unabhängig voneinander ausgebildet sind.

Es wird ferner bevorzugt, wenn ein Abtrieb des Primärantriebs als Schneckenrad ausgebildet ist. Das Schneckenrad wirkt bevorzugt tangential auf den ersten Kupplungsteil.

Es wird bei dem erfindungsgemäßen Parksperrenaktuator ferner bevorzugt, wenn der Sekundärantrieb einen Energiespeicher aufweist, welcher dazu eingerichtet ist, eine in ihm gespeicherte Energie zur Drehung der Aktuatorwelle in eine vorgegebene Drehrichtung freizugeben. Dabei kann ferner vorgesehen sein, dass der Parksperrenaktuator dazu eingerichtet ist, in der ersten Kupplungsstellung Energie im Energiespeicher zu speichern, wenn der Primärantrieb die Aktuatorwelle dreht.

Vorzugsweise ist der Energiespeicher als mechanische Energie speicherndes Federelement, vorzugsweise als Drehfeder, ausgebildet.

Der erfindungsgemäße Parksperrenaktuator kann ferner ein Sicherungselement umfassen, das eine zum zweiten Kupplungsteil weisende axiale Bewegung des ersten Kupplungsteils hemmt.

Die der Erfindung zugrunde liegende Aufgabe wird ferner gelöst durch eine Parksperre, umfassend einen erfindungsgemäßen Parksperrenaktuator und eine Parksperrenklinke, die mittels der Aktuatorwelle zwischen einer Freigabestellung und einer Sperrstellung bewegbar ist.

Dabei ist zweckmäßigerweise vorgesehen, dass die Parksperrenklinke durch die infolge des Freigebens der gespeicherten Energie erzeugte Drehung in die Sperrstellung bewegbar ist.

Die der Erfindung zugrunde liegende Aufgabe wird außerdem gelöst durch eine elektrische Antriebseinrichtung für ein elektrisch antreibbares Fahrzeug, umfassend eine elektrische Maschine, eine Abtriebswelle, eine mittels der Abtriebswelle mit der elektrischen Maschine gekoppelte Getriebevorrichtung mit einem Getriebeelement und einer erfindungsgemäßen Parksperre, wobei das Getriebeelement mittels der Parksperre blockierbar ist.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine geschnittene Ansicht eines ersten Ausführungsbeispiels des erfindungsgemäßen Parksperrenaktuators;
- Fig. 2: eine weitere geschnittene Ansicht des Parksperrenaktuators gemäß dem ersten Ausführungsbeispiel;
- Fig. 3: einen Gleitring gemäß dem ersten Ausführungsbeispiel;
- Fig. 4: eine perspektivische Ansicht des zweiten Kupplungsteils gemäß dem ersten Ausführungsbeispiel;
- Fig. 5: eine geschnittene Ansicht des zweiten Kupplungsteils gemäß dem ersten Ausführungsbeispiel;
- Fig. 6: eine perspektivische Ansicht der Aktuatorwelle gemäß dem ersten Ausführungsbeispiel;
- Fig. 7: eine seitliche Ansicht der Aktuatorwelle gemäß dem ersten Ausführungsbeispiel;
- Fig. 8: eine perspektivische Ansicht eines Sicherungsmittels gemäß dem ersten Ausführungsbeispiel;
- Fig. 9: eine perspektivische Ansicht des Parksperrenaktuators gemäß dem ersten Ausführungsbeispiel;
- Fig. 10: eine geschnittene Detailansicht eines zweiten Ausführungsbeispiels des erfindungsgemäßen Parksperrenaktuator; und
- Fig. 11: eine Prinzipskizze eines Ausführungsbeispiels der erfindungsgemäßen Antriebseinrichtung mit einem Ausführungsbeispiel der erfindungsgemäßen Parksperre.

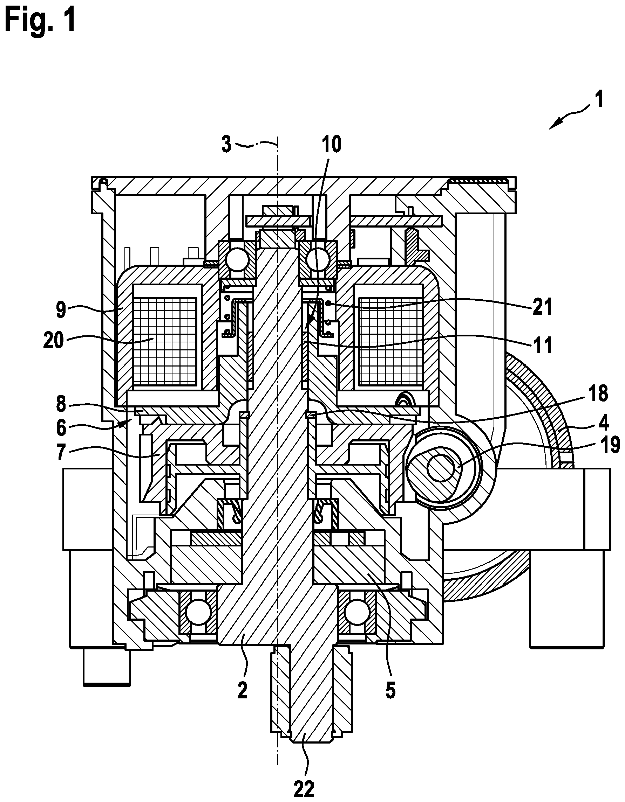

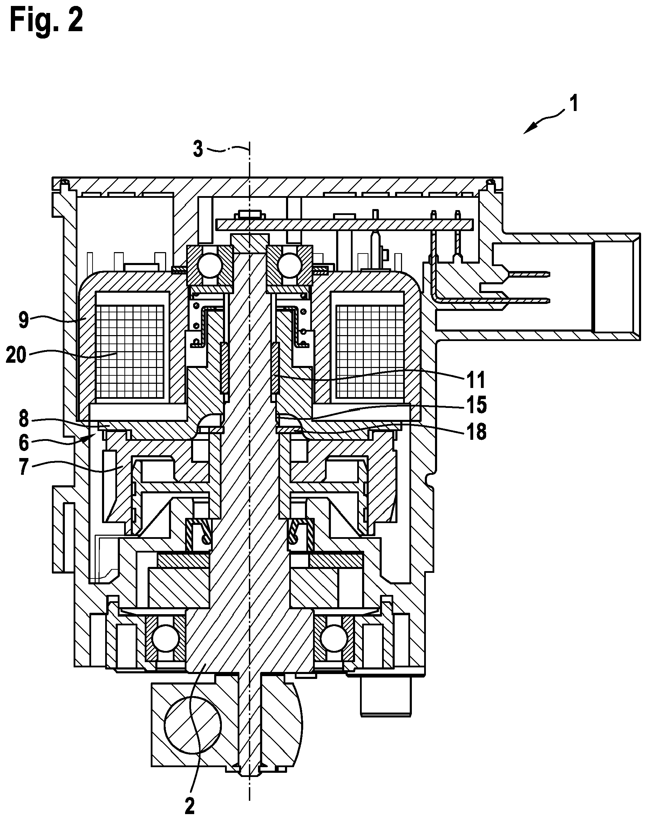

Fig. 1 und Fig. 2 sind jeweils ist eine geschnittene Ansicht eines ersten Ausführungsbeispiels eines Parksperrenaktuator 1.

Der Parksperrenaktuator 1 umfasst eine Aktuatorwelle 2, die um eine Drehachse 3 drehbar gelagert ist. Die Schnittebenen von Fig. 1 und Fig. 2 sind dabei um 90° um die Drehachse 3 versetzt. Daneben umfasst der Parksperrenaktuator 1 einen Primärantrieb 4, einen Sekundärantrieb 5 und eine Kupplung 6.

Die Kupplung 6 umfasst einen ersten Kupplungsteil 7, der drehbar auf der Aktuatorwelle 3 angeordnet ist und durch den Primärantrieb 4 zur Durchführung einer Drehbewegung um die Drehachse 3 antreibbar ist. Daneben umfasst die Kupplung 6 einen zweiten Kupplungsteil 8, der in Fig. 1 und Fig. 2 in einer ersten Kupplungsstellung gezeigt ist. In der ersten Kupplungsstellung ist der zweite Kupplungsteil 8 in Eingriff mit dem ersten Kupplungsteil 7 und zur Übertragung der Drehbewegung des ersten Kupplungsteils 7 auf die Aktuatorwelle 2 mit dieser gekoppelt. Die Kupplung 6 umfasst ferner eine Betätigungsvorrichtung 9. Mittels dieser ist der zweite Kupplungsteil 8 aus der ersten Kupplungsstellung sind die zweite Kupplungsstellung überführbar, in welcher die Kupplungsteile 7, 8 außer Eingriff sind. Dabei ist die Aktuatorwelle 2 mittels des Sekundärantriebs um die Drehachse 3 drehbar.

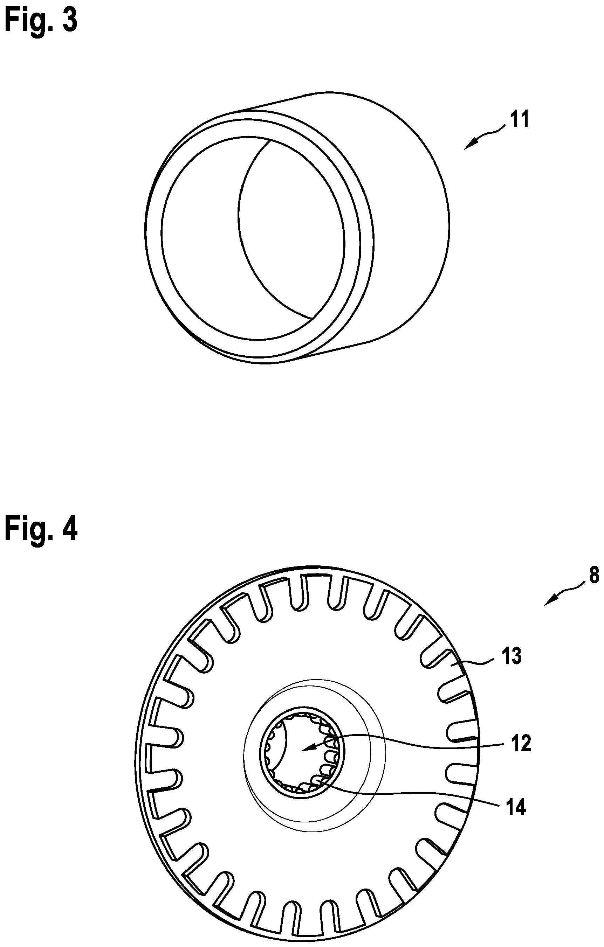

Der Parksperrenaktuator 1 umfasst ferner ein Gleitlager 10, welches durch einen Gleitring 11 ausgebildet ist. Fig. 3 zeigt dazu eine perspektivische Ansicht des Gleitrings 11 gemäß dem ersten Ausführungsbeispiel. Der Gleitring 11 ist aus einem Kunststoff, hier PTFE, gebildet. Ersichtlich ist der Gleitring 11 an seiner äußeren Mantelfläche angefast.

Wieder mit Bezug zu Fig. 1 und Fig. 2 ist der Gleitring 11 drehfest durch Einpressen mit dem zweiten Kupplungsteil 8 verbunden. Wird der zweite Kupplungsteil 8 mithin durch die Betätigungsvorrichtung 9 in axialer Richtung entlang der Drehachse 3 in die zweite Kupplungsstellung bewegt, so reduziert das Gleitlager 10 die Reibung zwischen den zweiten Kupplungsteil und der Aktuatorwelle 2, ohne dass die Gefahr eines Verkanten es besteht, wie sie beispielsweise bei einem herkömmlichen Parksperrenaktuator mit axial angeordneten Kugelreihen zur Lagerung bestehen kann.

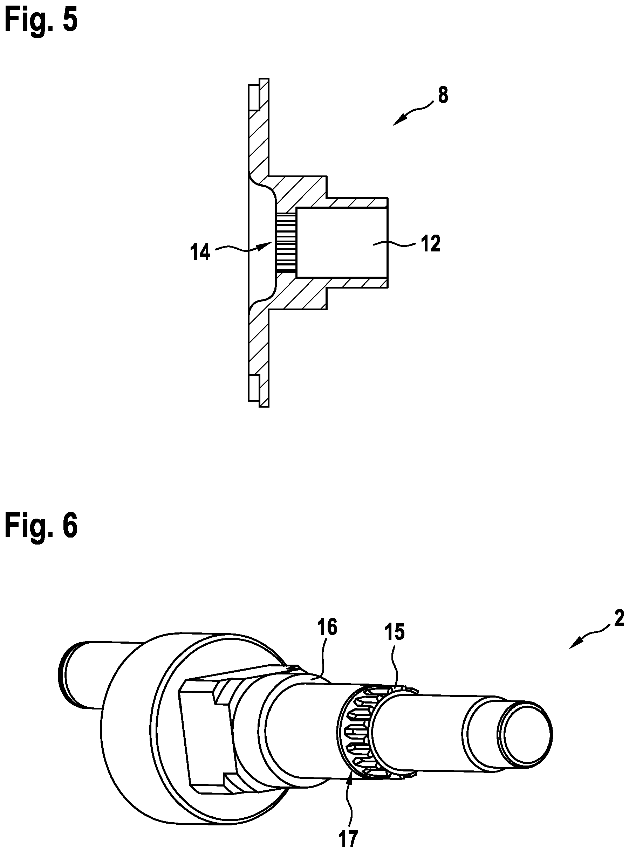

Fig. 4 und Fig. 5 zeigen jeweils den zweiten Kupplungsteil 8, wobei Fig. 4 eine perspektivische Ansicht ist und Fig. 5 eine geschnittene Ansicht ist.

Erkennbar ist zunächst ein zylindrischer Aufnahmeraum 12 für den Gleitring 11, wobei der Gleitring 11 vollständig im Aufnahmeraum 12 aufgenommen ist. Der Aufnahmeraum 12 ist an einer dem ersten Kupplungsteil 7 entgegengesetzten Seite des zweiten Kupplungsteils 8 ausgebildet. Erkennbar sind ferner Klauen 13, die an einer dem ersten Kupplungsteil 7 zugewandten Seite des zweiten Kupplungsteils ausgebildet sind, und in gegengleich ausgebildete Klauen des ersten Kupplungsteils eingreifen können.

Der zweite Kupplungsteil weist ferner einen Verbindungsabschnitt 14 auf, der durch eine Innenverzahnung ausgebildet ist. Der Verbindungabschnitt 14 befindet sich an einer dem ersten Kupplungsteil 7 (siehe Fig. 1 und 2) zugewandten Seite des Aufnahmeraums 12 bzw. des Gleitrings 11.

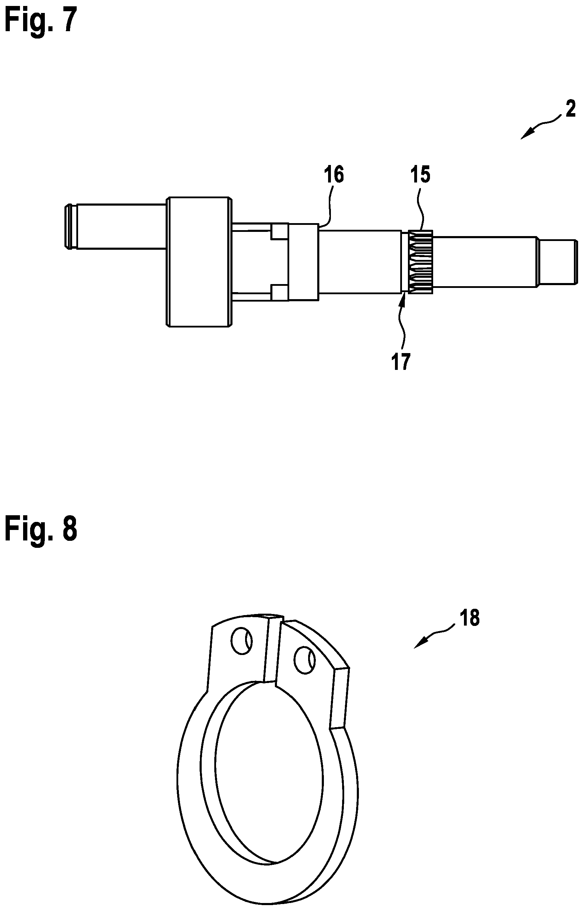

Fig. 6 und Fig. 7 zeigen jeweils die Aktuatorwelle 2, wobei Fig. 6 eine perspektivische Ansicht ist und Fig. 7 eine geschnittene Ansicht ist.

Die Aktuatorwelle 2 weist ebenfalls einen Verbindungsabschnitt 15 auf, der korrespondierend mit dem Verbindungsabschnitt 14 des zweiten Kupplungsteils 8 ausgebildet ist. D. h. der Verbindungsabschnitt 15 ist durch eine Außenverzahnung ausgebildet. In der ersten Kupplungsstellung sind die Verbindungsabschnitte 14, 15 zur Übertragung der Drehbewegung des ersten Kupplungsteils 7 auf die Aktuatorwelle 2 formschlüssig gekoppelt und bilden eine Kerbverzahnung aus. In der zweiten Kupplungsstellung sind die Verbindungsabschnitte 14, 15 entkoppelt.

Fig. 5 und Fig. 6 zeigen ferner einen Absatz 16, der eine axiale Bewegung des ersten Kupplungsteils 7 hemmt und eine Nut 17, in welche ein in den Fig. 1 und Fig. 2 im eingesetzten Zustand gezeigtes Sicherungselement 18 einsetzbar ist. Fig. 8 zeigt das Sicherungselement 18, das hier als Klemmring ausgebildet ist und eine axiale Bewegung des ersten Kupplungsteils 7 in Richtung des zweiten Kupplungsteils 8 hemmt. Gemäß einem alternativen Ausführungsbeispiel ist das Sicherungselement 18 als Hülse ausgebildet, die auf der Aktuatorwelle 2 angeordnet, beispielsweise aufgepresst, ist. Die Aktuatorwelle 2 weist dann einen zusätzlichen Absatz als Anschlagsfläche auf.

Wieder mit Bezug zu Fig. 1 weist der Primärantrieb 4 einen Elektromotor und einen als Schneckenrad 19 ausgebildeten Abtrieb auf. Durch das tangential auf den ersten Kupplungsteil 7 wirkende Schneckenrad 19 ist der erste Kupplungsteil 7 um die Drehachse 3 drehbar.

Der Sekundärantrieb 5 dient einer Auslösung des Parksperrenaktuators 1, wenn eine Störung des Primärantriebs vorliegt. Der Sekundärantrieb 5 weist dazu einen mechanischen Energiespeicher, hier in Form einer Drehfeder, auf, der eine in ihm gespeicherte Energie zur Drehung der Aktuatorwelle 2 freigeben kann.

Die Betätigungsvorrichtung 9 der Kupplung 6 umfasst einen Elektromagneten 20, welcher bei einer Bestromung durch einen von einem Versorgungsstromkreis des Primärantriebs 4 unabhängigen Versorgungsstromkreis eine magnetische Anziehungskraft auf den zweite Kupplungsteil 8 ausübt, wodurch dieses in die zweite Kupplungsstellung bewegbar ist. Mittels eines Rückstellelements 21 der Betätigungsvorrichtung 9 ist der zweite Kupplungsteil 8 aus der zweiten Kupplungsstellung in die erste Kupplungsstellung bewegbar. Dazu übt das als Feder ausgebildete Rückstellelement 21 die Rückstellkraft in Richtung des ersten Kupplungsteils 7 aus. Die Rückstellkraft ist dabei kleiner als die magnetische Anziehungskraft und bewegt den zweiten Kupplungsteil 8 nach einer Beendigung der Bestromung des Elektromagneten zurück in die erste Kupplungsstellung.

Die Funktionsweise des Parksperrenaktuator 1 stellt sich mithin wie folgt dar: In einem Normalbetrieb befindet sich die Kupplung 6 in der ersten Kupplungsstellung. Dadurch ist ein Kraftübertragungsweg vom Primärantrieb 4 über den ersten Kupplungsteil 7, den zweiten Kupplungsteil 8 und die Verbindungsabschnitte 14, 15 auf die Aktuatorwelle 3 ausgebildet, so dass diese sich um die Drehachse 3 dreht. Kommt es nun zu einer Störung des Primärantriebs 4, wird die Betätigungsvorrichtung 9 aktiviert und bewegt den zweiten Kupplungsteil 8 in axialer Richtung in die zweite Kupplungsstellung. Dadurch wird die Kopplung der Kupplungsteile 7, 8 gelöst, sodass der Kraftübertragungsweg unterbrochen ist. Die im Energiespeicher des Sekundärantriebs 5 gespeicherte Energie kann nun in eine Drehung der Aktuatorwelle 2 umgesetzt werden. In der zweiten Kupplungsstellung ist auch die Kopplung der Verbindungsabschnitte 14, 15 aufgehoben, da deren Überdeckung in der ersten Kupplungsstellung kleiner als ein Bewegungsweg des zweiten Kupplungsteils 8 von der ersten Kupplungsstellung in die zweite Kupplungsstellung ist. Dadurch ist der zweite Kupplungsteil 8 nicht mehr drehfest mit der Aktuatorwelle 2 verbunden, sodass sich diese innerhalb des Gleitlagers 11 frei um die Drehachse 3 drehen kann.

Wie aus den Fig. 1 und 2 ferner ersichtlich ist, weist die Aktuatorwelle 2 einen Exzenter 22 auf.

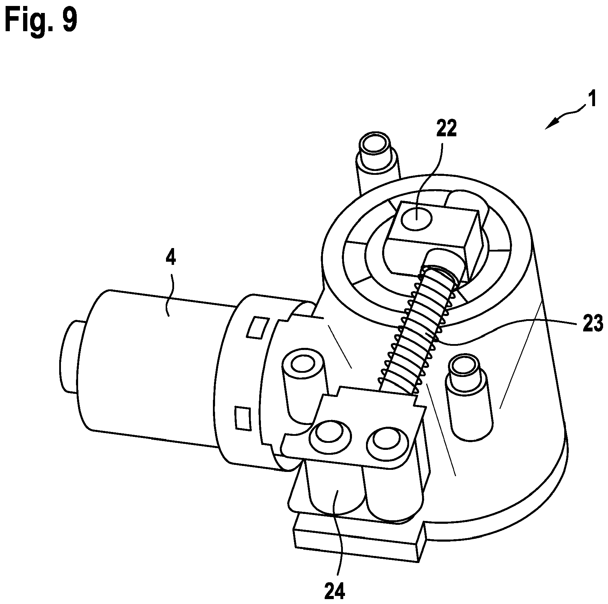

Fig. 9 ist eine perspektivische Ansicht des Parksperrenaktuators 1 gemäß dem ersten Ausführungsbeispiel.

Der Exzenter 22 ist mit einem Ende einer Parksperrenstange 23 verbunden, deren anderen Ende eine Rollenhalterung 24 aufweist. An dieser ist eine nicht gezeigte Parksperrenklinke anordenbar. D.h. durch die zuvor beschriebene Drehung der Aktuatorwelle 2 ist die Parksperrenklinke betätigbar.

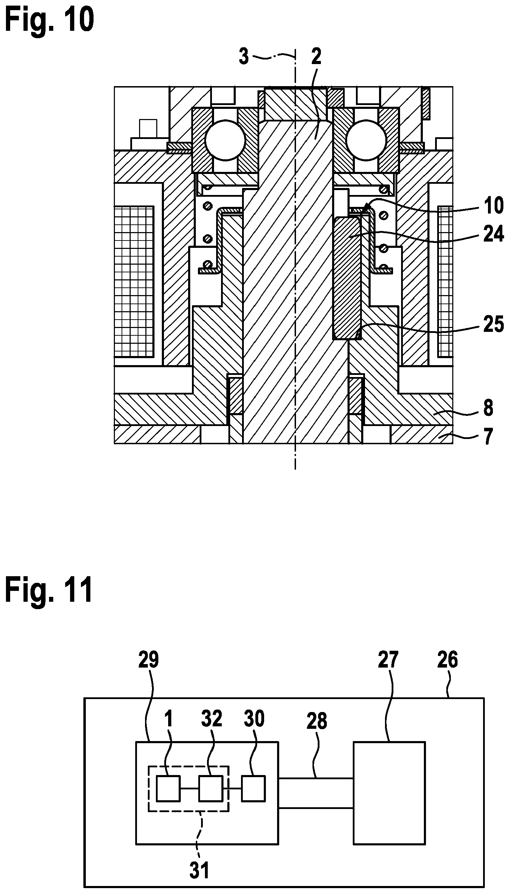

Fig. 10 ist eine geschnittene Detailansicht eines zweiten Ausführungsbeispiels eines Parksperrenaktuators 1, das im Wesentlichen bis auf die folgenden Abweichungen dem ersten Ausführungsbeispiel entspricht.

Anstelle eines Gleitrings weist das Gleitlager 10 drei sich parallel zur Drehachse 3 erstreckende stabförmige Gleitelemente 24 auf, die in Umfangsrichtung um die Aktuatorwelle 2 in einer jeweiligen Nut 25 des zweiten Kupplungsteils 8 angeordnet sind.

Gemäß diesem Ausführungsbeispiel erfolgt in der zweiten Kupplungsstellung keine Entkopplung der Aktuatorwelle 2 vom zweiten Kupplungsteil 8, so dass dieses durch den Sekundärantrieb 5 mitgedreht wird.

Fig. 11 ist eine Prinzipskizze eines Ausführungsbeispiels einer elektrischen Antriebseinrichtung 26 für ein elektrisch antreibbares Fahrzeug, wie ein Elektrofahrzeug (BEV) oder ein Hybridfahrzeug.

Die Antriebseinrichtung 26 umfasst eine elektrische Maschine 27, eine Abtriebswelle 28 und eine mittels der Abtriebswelle 28 mit der elektrischen Maschine 27 gekoppelte Getriebevorrichtung 29. Diese umfasst ein mit der Abtriebswelle 28 drehgekoppeltes Getriebeelement 30 welches durch ein Ausführungsbeispiel einer Parksperre 31 blockierbar ist. Die Parksperre 31 umfasst einen Parksperrenaktuator 1 gemäß einem der zuvor beschriebenen Ausführungsbeispiele sowie eine Parksperrenklinke 32, die durch den Parksperrenaktuator 1 betätigbar ist. Dabei kann die Parksperrenklinke 32 durch die Drehung der Aktuatorwelle 2 infolge des Freigebens der gespeicherten Energie des Sekundärantriebs 5 (siehe Fig. 1 und 2) in eine das Getriebeelement 30 blockierende Sperrstellung bewegt werden.

## Patentansprüche

1. Parksperrenaktuator (1), umfassend
- eine Aktuatorwelle (2), die um eine Drehachse (3) drehbar gelagert ist,
- einen Primärantrieb (4),
- einen Sekundärantrieb (5), und
- eine Kupplung (6) mit
- einem ersten Kupplungsteil (7), der auf der Aktuatorwelle (2) angeordnet und durch den Primärantrieb (4) zur Durchführung einer Drehbewegung um die Drehachse (3) antreibbar ist,
- einem zweiten Kupplungsteil (8), der aus einer ersten Kupplungsstellung, in welcher der zweite Kupplungsteil (8) in Eingriff mit dem ersten Kupplungsteil (7) und zur Übertragung der Drehbewegung des ersten Kupplungsteils (7) auf die Aktuatorwelle (3) mit dieser gekoppelt ist, in eine zweite Kupplungsstellung überführbar ist, in welcher die Kupplungsteile (7, 8) außer Eingriff sind und die Aktuatorwelle (3) mittels des Sekundärantriebs (5) um die Drehachse (3) drehbar ist, und
- einer Betätigungsvorrichtung (9), durch welche der zweite Kupplungsteil (8) aus der ersten Kupplungsstellung in die zweite Kupplungsstellung bewegbar ist,
**gekennzeichnet durch**
ein Gleitlager (10), durch welches der zweite Kupplungsteil (8) beim Bewegen zwischen der ersten Kupplungsstellung und der zweiten Kupplungsstellung entlang der Aktuatorwelle (2) führbar ist.

2. Parksperrenaktuator nach Anspruch 1, wobei
das Gleitlager (10) durch einen Gleitring (11) ausgebildet ist.

3. Parksperrenaktuator nach Anspruch 1, wobei
das Gleitlager (10) durch mehrere sich parallel zur Drehachse (3) erstreckende stabförmige Gleitelemente (24) ausgebildet ist.

4. Parksperrenaktuator nach einem der vorhergehenden Ansprüche, wobei das Gleitlager (10) drehfest mit dem zweiten Kupplungsteil (8) verbunden ist.

5. Parksperrenaktuator nach einem der vorhergehenden Ansprüche, wobei die Aktuatorwelle (2) einen Verbindungsabschnitt (15) und der zweite Kupplungsteil (8) einen zum Verbindungsabschnitt (15) der Aktuatorwelle (2) korrespondierenden Verbindungsabschnitt (14) aufweist, wobei die Verbindungsabschnitte (14, 15) in der ersten Kupplungsstellung zur Übertragung der Drehbewegung formschlüssig gekoppelt und in der zweiten Kupplungsstellung entkoppelt sind.

6. Parksperrenaktuator nach Anspruch 5, wobei
die Verbindungsabschnitte (14, 15) jeweils durch eine Verzahnung ausgebildet sind.

7. Parksperrenaktuator nach einem der vorhergehenden Ansprüche, wobei die Betätigungsvorrichtung (9) einen Elektromagneten (20) umfasst, welcher bei einer Bestromung eine magnetische Anziehungskraft erzeugt, durch die der zweite Kupplungsteil (8) in die zweite Kupplungsstellung bewegbar ist.

8. Parksperrenaktuator nach einem der vorhergehenden Ansprüche, wobei die Betätigungsvorrichtung (9) ein Rückstellelement (21) umfasst, welches eine zum ersten Kupplungsteil (7) gerichtete Rückstellkraft auf den zweite (8) Kupplungsteil ausübt.

9. Parksperrenaktuator nach einem der vorhergehenden Ansprüche, wobei der Primärantrieb (4) einen Elektromotor aufweist und/oder wobei ein Abtrieb des Primärantriebs (4) als Schneckenrad (19) ausgebildet ist.

10. Parksperrenaktuator nach einem der vorhergehenden Ansprüche, wobei der Sekundärantrieb (5) einen Energiespeicher aufweist, welcher dazu eingerichtet ist, eine in ihm gespeicherte Energie zur Drehung der Aktuatorwelle (2) in eine vorgegebene Drehrichtung freizugeben.

11. Parksperrenaktuator nach Anspruch 10, wobei
der Energiespeicher als mechanische Energie speicherndes Federelement, vorzugsweise als Drehfeder, ausgebildet ist.

12. Parksperrenaktuator nach einem der vorhergehenden Ansprüche, ferner umfassend ein Sicherungselement (18), das eine zum zweiten Kupplungsteil (8) weisende axiale Bewegung des erste Kupplungsteil (7) hemmt.

13. Parksperre (31), umfassend einen Parksperrenaktuator (1) nach einem der vorhergehenden Ansprüche und eine Parksperrenklinke (32), die mittels der Aktuatorwelle (2) zwischen einer Freigabestellung und einer Sperrstellung bewegbar ist.

14. Parksperre nach Anspruch 13, wenn abhängig von Anspruch 10, wobei die Parksperrenklinke (32) durch die infolge des Freigebens der gespeicherten Energie erzeugten Drehung in die Sperrstellung bewegbar ist.

15. Elektrische Antriebseinrichtung (26) für ein elektrisch antreibbares Fahrzeug, umfassend
- eine elektrische Maschine (27),
- eine Abtriebswelle (28),
- eine mittels der Abtriebswelle (28) mit der elektrischen Maschine (27) gekoppelte Getriebevorrichtung (29) mit einem Getriebeelement (30) und einer Parksperre (31) nach Anspruch 13 oder 14, wobei das Getriebeelement (30) mittels der Parksperre (31) blockierbar ist.
